Europäisches Patentamt

European Patent Office

Office européen des brevets

(19)

(11) Numéro de publication : **0 080 912**
**B1**

(12)                          FASCICULE DE BREVET EUROPÉEN

(45) Date de publication du fascicule du brevet :
11.12.85

(51) Int. Cl.⁴ : **A 01 C  7/08**, A 01 C  7/20

(21) Numéro de dépôt : 82401928.5

(22) Date de dépôt : 20.10.82

(54) Bras support de soc pour semoir à transport pneumatique.

(30) Priorité : 18.11.81 FR 8121609

(43) Date de publication de la demande :
08.06.83 Bulletin 83/23

(45) Mention de la délivrance du brevet :
11.12.85 Bulletin 85/50

(84) Etats contractants désignés :
DE IT

(56) Documents cités :
DE-A- 2 025 039
FR-A- 2 233 807
FR-A- 2 452 233
US-A- 1 527 803

(73) Titulaire : **NODET-GOUGIS**
**5 Boulevard du Général-Leclerc B.P. 36**
**F-77130 Montereau (FR)**

(72) Inventeur : **Gauchet, Yves Marcel Albert**
**17 avenue du Maréchal de Lattre de Tassigny**
**F-77130 Montereau (FR)**
Inventeur : **Paillaud, Pierre Gaston**
**13, rue Jean Vilar**
**F-77130 Montereau (FR)**

(74) Mandataire : **Phélip, Bruno et al**
**c/o Cabinet Harlé & Phélip 21, rue de la Rochefou-**
**cauld**
**F-75009 Paris (FR)**

## Description

La présente invention est relative à un bras support de soc pour semoir dans lequel les graines sont amenées par transport pneumatique.

Lorsqu'on procède à un semis à l'aide d'un semoir pourvu d'un dispositif de transport pneumatique, on opère habituellement de la façon suivante : un soc ouvre le sol en créant un sillon, puis les graines sont déposées pneumatiquement dans ce sillon à l'aide d'un conduit de mise en place situé immédiatement derrière le soc. Le sillon est ensuite refermé.

L'ensemble formé par le soc et le conduit subit, en plus de sa progression régulière vers l'avant, des déplacements horizontaux qui correspondent à la présence d'obstacles dans le sol, et des déplacements verticaux qui correspondent au fait que la surface du sol n'est pas horizontale et que les graines doivent être enterrées à une profondeur constante au-desous de cette surface. Ces mouvements horizontaux et verticaux sont rendus possibles par des moyens élastiques, qui ramènent le soc sur sa trajectoire après un obstacle, et qui assurent un enfoncement sensiblement constant du soc.

D'une façon générale, les bras support de soc sont articulés autour d'un axe horizontal, perpendiculaire au sens de marche du semoir. Associée à un organe élastique, cette articulation permet de suivre les dénivellations du sol en assurant une pression du soc sur le sol.

On a proposé, dans le cas d'un engin de labour, pour absorber les réactions transversales dues à des obstacles que le soc contourne par un déplacement latéral, un dispositif pourvu d'un ressort de rappel et qui permet un pivotement du bras autour d'un axe vertical aussi bien qu'horizontal (FR-A-2 452 233). Ce dispositif n'a pas, à la connaissance des inventeurs, été adapté au cas des semoirs, pour lesquels on fait appel habituellement à une déformation élastique du bras lui-même en torsion et/ou flexion. Dans certains supports réalisés par la demanderesse, cette déformation est facilitée par l'utilisation de 2 branches se comportant comme des ressorts de torsion. Les déformations de ce type de bras sont celles d'un ressort libre et sont proportionnelles aux efforts. En conséquence, le bras s'adapte très bien aux obstacles, au prix d'une certaine instabilité de trajectoire. Dans d'autres cas, l'emploi d'un tube reliant la chape d'articulation au soc assure la résistance aux efforts, avec une faible déformation ayant pour conséquence une moindre adaptation aux déformations importantes et donc une moindre durée de vie.

Il peut paraître logique d'utiliser un tel tube pour transporter pneumatiquement les graines dans le sillon, mais on se heurte à une difficulté : pour obtenir une solidité suffisante du tube, on doit lui donner un diamètre assez grand, et dans ce cas, le débit d'air doit être important si bien que la pose des graines est perturbée par le courant d'air. Si on utilise un tube plus mince, sa rigidité, notamment en torsion, est insuffisante et on a à la fois les inconvénients d'instabilité de trajectoire évoqués plus haut et une durée de vie limitée.

La présente invention a pour objet de conserver le bras tubulaire comme conduit, tout en obtenant une bonne tenue devant les obstacles et une bonne stabilité de trajectoire.

L'invention fournit donc un bras support de soc pour semoir alimenté par transport pneumatique, se composant d'un tube support disposé à peu près horizontalement, portant à son extrémité arrière le soc et le semoir et articulé à son extrémité avant sur un châssis porteur par une articulation à axe horizontal perpendiculaire au sens de la marche, et un moyen élastique de rappel agissant dans un plan vertical pour exercer sur le soc une force à peu près constante tendant à l'enfoncer dans le sol, caractérisé en ce que l'articulation à axe horizontal est du type à chape ouverte chargée par un ressort taré et permet un pivotement du tube support dans un plan horizontal lorsque ce tube est soumis à un couple horizontal dépassant une valeur choisie à l'avance, en ce que l'intérieur du tube support est, de façon connue en soi, relié à son extrémité avant à une alimentation en air comprimé et en graines, et à son extrémité arrière à un cyclone qui sépare les graines de la majeure partie du courant d'air d'entraînement, et dont l'extrémité inférieure fait partie du conduit de mise en place des graines dans le sillon.

On décrira ci-après un exemple de chape ouverte chargée par ressort. L'utilisation d'un tel type de chape permet :

une absence de déformation importante jusqu'à ce que le couple dû au produit de l'effort du ressort par la demi largeur de la chape soit atteint. Ceci garantit une bonne stabilité de trajectoire,

un déplacement transversal important de l'extrémité du soc lorsque l'effort continue à croître, ce qui permet d'éviter sans rupture des obstacles importants.

L'utilisation d'un cyclone au sommet du soc permet d'utiliser un débit d'air important sans perturber le placement des graines dans le sol.

On observera que l'utilisation d'un cyclone dans un semoir a déjà été décrite dans le brevet FR 2.233.807, au nom de la demanderesse, mais dans ce brevet le cyclone est alimenté par un tuyau souple qui n'est pas conçu pour constituer le bras-support du soc.

L'invention va être exposée plus en détail à l'aide d'un exemple non limitatif de réalisation de semoir selon l'invention, illustré par les dessins parmi lesquels :

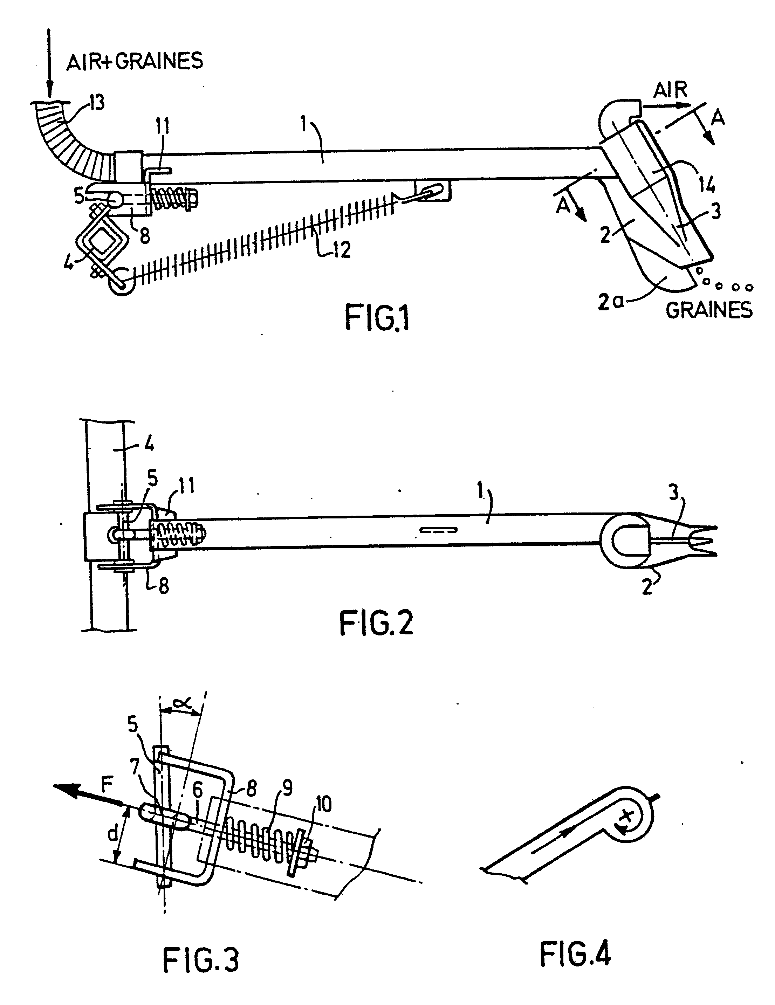

Figure 1   est une vue de côté schématique du bras support et des organes qui lui sont liés ;

Figure 2   est une vue de dessus de même ensemble ;

Figure 3   est une vue de détail de l'articulation en position oblique, le tube-support étant supposé enlevé ;

Figure 4 est une coupe schématique selon la ligne AA de la figure 1.

L'ensemble représenté aux figures comprend un bras-support 1 qui porte à l'extrémité arrière (à droite sur les figures), une pièce de soutien 2 laquelle supporte un soc 2a et le conduit 3 de mise en place des graines dans le sillon. Le bras-support est porté par une traverse fixe 4 du châssis du semoir par le moyen d'un ensemble d'articulation qui comprend un arbre 5 horizontal et perpendiculaire au sens de la marche, qui est fixe par rapport à la traverse 4. Une tige 6 est terminée par un œilleton 7 qui est traversé par l'arbre 5 avec un jeu suffisant pour permettre un pivotement appréciable, 10 à 15° dans le plan horizontal. Sur la tige 6 peut coulisser une chape ouverte 8 constituée d'une pièce en forme de U dans le plan horizontal, les deux extrémités de cette pièce présentent deux échancrures, également en forme de U et de largeur correspondant au diamètre de l'arbre 5. Un ressort 9, du type à boudin, est enfilé sur la tige 6 et exerce sur la chape ouverte 8 une pression vers l'avant. Cette pression est réglable à l'aide d'un écrou 10 qui se visse sur l'extrémité filetée de la tige 6. La chape 8 porte en outre deux ailes 11 qui sont soudées sur le tube 1 et le rendent solidaire de la chape.

Le fonctionnement de l'articulation à chape ouverte est le suivant : le ressort 9 exerce sur la chape 8 une force F qui tend à la maintenir en appui contre l'arbre 5, et le couple de maintien est égal au produit de cette force F par le demi-écartement d des branches de la chape.

Tant que le couple créé par les obstacles ou irrégularités du sol est inférieur au produit $F \times d$, le tube 1 reste perpendiculaire à l'arbre 5 et le soc 2a trace un sillon rectiligne. Si, au contraire, un obstacle plus important se présente, le couple $F \times d$ est dépassé, et le bras pivote d'un angle α. Le couple de rappel est exercé à la fois par le ressort 9 et par la réaction du sol sur la face avant du soc 2a pendant le déplacement.

Le maintien d'une pression régulière du soc 2a sur le sol est assuré, de façon classique, par un ressort 12, agissant à la traction dans le plan vertical et prenant appui d'une part sur le tube 1 et d'autre part sur la traverse 4.

Les graines et l'air qui les entraîne arrivent à l'extrémité avant du tube 1 par un conduit souple 13. A l'extrémité opposée est prévu un cyclone 14 qui comporte une sortie supérieure pour l'air et une sortie inférieure pour les graines, qui tombent de-là sur le sol par le conduit 3.

Bien entendu, l'exemple qu'on vient de décrire ne saurait limiter l'invention, et il est possible, par exemple, de remplacer les ressorts mécaniques 9, 12 par des ressorts hydrauliques ou pneumatiques, ou de compléter le semoir par des moyens de répartition des graines connus par ailleurs.

## Revendication

Bras support de soc pour semoir alimenté par un transport pneumatique des graines, se composant d'un tube support (1) disposé à peu près horizontalement, comportant à son extrémité arrière le soc (2a) et un conduit (3) de mise en place des graines dans le sillon et articulé à son extrémité avant sur un châssis porteur par une articulation à axe horizontal perpendiculaire au sens de la marche, et un moyen élastique de rappel (12) agissant dans un plan vertical pour exercer sur le soc une force à peu près constante tendant à l'enfoncer dans le sol, caractérisé en ce que l'articulation à axe horizontal est du type à chape ouverte (8) chargée par un ressort taré (9) et permet un pivotement du tube support (1) dans un plan horizontal lorsque ce tube est soumis à un couple horizontal dépassant une valeur choisie à l'avance, en ce que l'intérieur du tube support est, de façon connue en soi, relié à son extrémité avant à une alimentation en air comprimé et en graines, et à son extrémité arrière à un cyclone (14) qui sépare les graines de la majeure partie du courant d'air d'entraînement, et dont l'extrémité inférieure est prolongée par le conduit (3) de mise en place des graines dans le sillon.

## Claim

Mounting arm for the furrow opener of a seed drill fed by pneumatic seed transport, consisting of a mounting tube (1) which is disposed substancially horizontally and carries at its rear end the furrow opener (2a) and a pipe (3) for placing the seeds in the furrow and which is articulated at its front end on a carrier frame by means of an articulation having a horizontal axis at right angles to the direction of travel, and of an elastic return means (12) acting in a vertical plane to apply to the furrow opener an approximately constant force tending to drive it into the ground, characterized in that the articulation having a horizontal axis is of the type having an open yoke (8) loaded by a calibrated spring (9) and permits pivoting of the mounting tube (1) in a horizontal plane when the tube is subjected to a horizontal moment exceeding a preselected value, in that the interior of the mounting tube is connected in a manner known *per se* at its front end to a compressed air and seed supply means and at its rear end to a cyclone (14) which separates the seeds from the greater part of the current of entraining air and whose bottom end is extended by the pipe (3) which places the seeds in the furrow.

## Patentanspruch

Tragarm für eine Drillschar einer Sämaschine mit pneumatischer Saatgutzufuhr, bestehend aus einem weitgehend horizontal angeordneten Tragrohr (1), das an seinem rückwärtigen Ende die Drillschar (2a) und ein Rohr (3) zur Einführung des Saatguts in die Furche trägt und an seinem Vorderende mittels eines Gelenks mit horizontaler, rechtwinklig zur Bewegungsrichtung liegender Achse an einem Stützrahmen angelenkt ist, und einer federnden Rückzugsvorrichtung (12), die eine im wesentlichen konstante, in einer senkrechten Ebene auf die Drillschar einwirkende Kraft ausübt, welche diese in den Boden zu drücken strebt, dadurch gekennzeichnet, dass das Gelenk mit horizontaler Achse mit einem offenen Joch (8) ausgebildet ist und durch eine kalibrierte Feder (9) belastet wird und ein Verschwenken des Tragrohrs (1) in einer horizontalen Ebene zulässt, wenn ein einen vorgewählten Wert überschreitendes horizontales Moment auf dieses Rohr einwirkt, und dass der Innenraum des Tragrohrs in an sich bekannter Weise an seinem Vorderende an eine Druckluftzufuhr und Saatgutzufuhr und an seinem rückwärtigen Ende an einen Zyklon (14) angeschlossen ist, der das Saatgut von dem grössten Teil des Trägerluftstromes abtrennt und dessen unteres Ende durch das Rohr (3) zur Einführung des Saatguts in die Furche verlängert ist.

AIR + GRAINES

**FIG.1**

**FIG.2**

**FIG.3**

**FIG.4**